# EUROPEAN PATENT SPECIFICATION

(11) **EP 0 733 834 B1**
(45) Date of publication and mention of the grant of the patent: **24.10.2001**
(21) Application number: 96103688.6
(22) Date of filing: 08.03.1996
(51) Int. Cl.: F16H 63/30, F16H 57/08, F16D 25/08, F16H 3/66

(54) **Hydraulic clutch for automatic transmission in motor vehicles**
Hydraulikkupplung für automatische Getriebe in Kraftfahrzeugen
Embrayage hydraulique pour transmission automatique dans des véhicules automobiles

(30) Priority: 24.03.1995 JP 9014395; 25.09.1995 JP 26903995
(43) Date of publication of application: 25.09.1996
(73) Proprietor: AISIN AW CO., LTD., Anjo-shi Aichi-ken (JP)
(72) Inventor: Moroto, Shuzo, Nagoya-shi, Aichi-ken 458 (JP); Taniguchi, Takao, Okazaki-shi, Aichi-ken, 444-21 (JP); Miyagawa, Shoichi, Okazaki-shi, Aichi-ken, 444-31 (JP); Tsukamoto, Kazumasa, Toyota-shi, Aichi-ken, 471 (JP); Hayabuchi, Masahiro, Anjo-shi, Aichi-ken, 446 (JP); Nishida, Masaaki, Anjo-shi, Aichi-ken, 446 (JP); Kasuya, Satoru, Hekinan-shi, Aichi-ken, 447 (JP); Teraoka, Yutaka, Anjo-shi, Aichi-ken, 444-11 (JP)
(74) Representative: VOSSIUS & PARTNER

(56) References cited:
- DE-A- 3 705 052
- US-A- 3 038 575
- US-A- 3 251 247
- US-A- 3 613 848
- KONSTRUKTION, vol. 40, no. 8, August 1988, page A07 XP000029661 "LAMELLENKUPPLUNGEN"
- PATENT ABSTRACTS OF JAPAN vol. 013, no. 289 (M-845), 5 July 1989 & JP 01 083927 A (AISIN SEIKI CO LTD), 29 March 1989,
- ORGANI DI TRASMISSIONE, vol. 21, no. 4, 1 April 1990, pages 103-105, XP000133412 "FRIZIONI CON COMANDO A FLUIDO"

## Description

The present invention relates to an automatic transmission for a vehicle and, more particularly, to a vehicular automatic transmission having a gear train construction for switching power transmission paths by a clutch which disconnects the hydraulic servo portion from rotary members.

In the prior art, the multiple disk clutch, which is introduced into the gear train of an automatic transmission for connecting the rotary members of a transmission mechanism to each other so as to transmit and block the transmission of power, is constructed to have a friction plate portion by laminating alternately in the axial direction a plurality of friction members, which are irrotationally supported on the outer circumference of the hub by splining their inner circumferences thereby, and a plurality of separator plates which are irrotationally supported on the inner circumference of the drum by likewise splining their outer circumferences. The hydraulic servo for thrusting that friction plate portion is constructed to define an oil chamber by the cylinder, which is disposed at the side of the clutch drum fixed on one rotary member and integrated with the drum, and by the piston which is slidably arranged in the cylinder, so that the piston is forced out by the oil pressure fed to the oil chamber, to thrust the friction plate portion thereby to apply the clutch. In short, the hydraulic servo is adapted to rotate together with the clutch drum. The clutch having this construction is exemplified by the technique which is disclosed in JP-A-5-321947.

Generally in the automatic transmission, the rotary members experience a rotational change at a shifting time so that an inertia force (or inertia torque) is established by the rotational change and the weight of the rotary members to influence the fluctuations of the output shaft torque thereby to cause shift shocks. If the aforementioned prior art is evaluated from this aspect, according to this technique, the clutch drum containing the hydraulic servos is fixed on the rotary members, so that the weight of the rotary members is increased by the hydraulic servos to augment the inertia torque thereby to enlarge the aforementioned shift shocks. Moreover, when the hydraulic servo of the clutch is integrated with the clutch drum as in the prior art, a centrifugal oil pressure is generated by the centrifugal force acting upon the oil in the cylinder so that the piston receives the oil pressure which is higher by the centrifugal oil pressure than the output oil pressure coming from a hydraulic control system. For these reasons, an oil chamber for offsetting the centrifugal oil pressure is provided according to the aforementioned technique disclosed in JP-A-5- 321947.
However, this provision of the centrifugal oil pressure offsetting chamber is not preferred for lightening the shift shocks because it invites an increase in the weight of the rotary members . The provision of the centrifugal oil pressure offsetting chamber raises another problem that the size of the system is enlarged.

From US-A-3 251 247 a drive transmission device is known. The transmission device comprises a transmission case, an input shaft, a transmission mechanism connected to the input shaft and including a plurality of transmission elements, an output shaft connected to the transmission mechanism, a clutch connecting any two of the input shaft and the transmission elements to each other in a driving manner, and a hydraulic servo for activating the clutch when fed with an oil pressure. The hydraulic servo further comprises a stationary type cylinder formed on the transmission case, a piston arranged slidably in the cylinder and defining, together with the cylinder, an oil chamber to be fed with oil pressure and a bearing arranged between the piston and the clutch for transmitting the thrust forces, as coming from the piston when the oil pressure is fed to the oil chamber, to the clutch while allowing relative rotations between the piston and the clutch.

The invention differs from US-A-3 251 247 in that the invention is related to an automatic vehicular transmission and in the arrangement of the hydraulic servo.

It is, therefore, a general or first object of the present invention to provide a vehicular automatic transmission which is enabled to lighten the shift shocks. This object is achieved by the features of the claims. In particular the object is achieved by making the stationary type hydraulic servo portion separate of the rotary members to reduce the inertia torque of the rotary members and to reduce the size and weight by making it unnecessary to form the centrifugal oil pressure offsetting chamber in the clutch hydraulic servo.

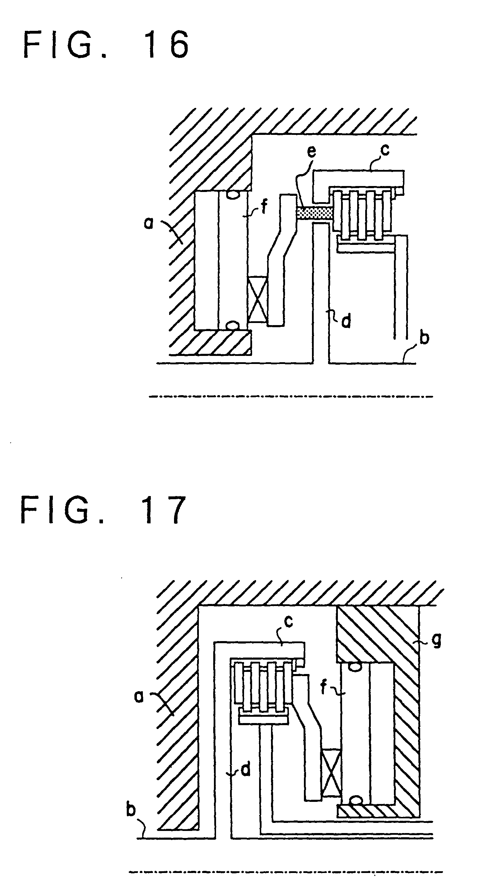

When the aforementioned clutch is the input clutch for connecting the input shaft and the transmission element, the following problems arise if the input shaft is connected to the rim at the outer circumferential side of the clutch as in the case in which the cylinder is formed in the clutch drum of the prior art. Specifically, if it is intended to shorten the axial size by forming the stationary cylinder of the hydraulic servo in the side wall a of the axial end portion of the case, as shown in Fig. 16, the clutch is applied through an apply tube 3 which extends through a connection member d connecting an input shaft b and a circumferential rim c, because the input shaft b is introduced from the side wall a. As a result, the apply tube e has to be given a comb-shaped arrangement so that the thrust force from a piston f is not transmitted uniformly of the circumferential direction of the clutch, thus making the bearing pressure ununiform. On the other hand, when the clutch is thrust all over the circumference, as shown in Fig. 17, so as to prevent the ununiform bearing pressure, a center support g for forming another cylinder is required to enlarge the axial size. Incidentally, Figs. 16 and 17 are described on the case in which the side wall to be formed with the stationary type cylinder and the side wall to receive the input shaft b are identical. In case, however, the input shaft is introduced from one side wall of the two axial end portions of the case and extended to the other side wall, similar problems also arise when the stationary cylinder is formed in the other side wall.

It is, therefore, a second object of the present invention to prevent the aforementioned ununiformity of the bearing pressure while shortening the axial size by the arrangement of the hydraulic servo utilizing the case side walls when the clutch is the input clutch of the transmission mechanism to be actuated by the stationary cylinder type hydraulic servo.

In the aforementioned stationary cylinder type hydraulic servo, moreover, the piston thrust force and the reaction cannot be balanced in the clutch drum unlike the clutch drum using the rotary type cylinder of the prior art. It is, therefore, a third object of the present invention to prevent the reaction resulting from the thrust force from the hydraulic servo from acting upon the transmission mechanism, in the construction in which the input clutch is actuated by the stationary cylinder type hydraulic servo.

Next, the clutch is desired that the friction plate portions be fed at all times with the lubricating oil, so as to prevent the heat generation no matter whether it might be applied or released, and to achieve stable friction characteristics at the time of applying or releasing the clutch. In the clutch drum type of the prior art equipped with the hydraulic servo, however, most of transmission elements of the transmission mechanism stand still at the stop of the vehicle or at the gear stage, in which the transmission elements take no participation, for the construction in which the rim side is connected to the input shaft whereas the hub side is connected to one of the transmission elements. In this state, the still hubs obstruct the feed of the lubricating oil from the radially inner side of the hubs to the friction plate portions, to cause disadvantages in the aforementioned prevention of the heat generation and in the maintenance of the stable friction characteristics. These problems are necessarily caused when the clutch drum is connected to the input shaft.

It is, therefore, a fourth object of the present invention to enable the clutch construction having the stationary cylinder type hydraulic servo to feed the friction plate portions with the lubricating oil at all times by connecting the hubs to the input shaft.

Incidentally, the bearing is the more advantageous, if its radius of gyration is the smaller, so that the relative rotation may be reduced to achieve a high maximum r.p.m. allowed. On the other hand, the clutch is desired to have a diameter as large as possible for retaining the friction face. In case, however, the friction plate portion is to be thrust by the bearing, it is demanded to have a small diameter on one hand and a large diameter on the other hand because the stationary cylinder type hydraulic servo is used. It is, therefore, a fifth object of the present invention to realize a construction which can satisfy such contradictory demands for the bearing arranged relative to the hydraulic servo.

It is a sixth object of the present invention to reduce the size of the system by a return spring arrangement utilizing the radially inner side of the clutch which is given the large diameter, as described above.

In the case of the rotary cylinder type clutch drum of the prior art, moreover, the reaction is borne only in the clutch drum, but no external force is applied to the clutch, so that the stroke of the piston at the time of applying the clutch is substantially constant. In the case of the stationary cylinder, on the contrary, the reaction is borne through another member such as the transmission mechanism or the input shaft so that various forces other than the thrust force of the hydraulic servo, such as the thrust force of the helical gear are applied to the clutch. If these forces are active at the time of releasing the clutch, the clearances between the friction plate portions of the clutch will change with the situations at that time so that the engaging characteristics of the clutch will change with the change in the clearances when the clutch is to be applied. This will invite not only the deterioration of the controllabilities of the oil pressure at the shifting time but also the shifting shocks.

It is, therefore, a seventh object of the present invention to hold the clearances of the clutch of the construction using the stationary cylinder type hydraulic servo at a constant level to reduce the change in the engaging characteristics of the clutch and the shifting shocks.

An eighth object of the present invention is to realize the stable lubrication of the bearing which is arranged relative to the hydraulic servo in the aforementioned clutch construction.

Incidentally, there exists in the prior art the technique itself of making the hydraulic servo of the clutch merely irrotational, as disclosed in JP-A-2-290 731 and JP-A-4-285 331. The former is applied to the clutch for connecting the differential mechanism and the output shaft for the torque distribution between the front and rear wheels in the center differential unit, and the latter is applied to the clutch for connecting the output gear of the power extraction unit (or power takeoff unit) to the output shaft. If the clutch having the unrotatable hydraulic servo is accordingly arranged at the final output takeoff portion which has no drastic rotation change at the shifting time of the transmission mechanism of the automatic transmission, there cannot be achieved the important functions, as intended by the present invention, to lighten the shift shock by reducing the inertia torque and to prevent the deteriorations of the oil pressure control characteristics due to the absence of the centrifugal oil pressure.

According to a first aspect of the present invention for achieving the aforementioned first object, there is provided a vehicular automatic transmission for establishing a plurality of forward gear stages, comprising: a transmission case; an input shaft; a transmission mechanism connected to the input shaft and including a plurality of transmission elements; an output shaft connected to the transmission mechanism; a clutch connecting any two of the input shaft and the transmission elements to each other in a driving manner; and a hydraulic servo for applying the clutch when fed with an oil pressure, wherein the hydraulic servo include: a stationary type cylinder formed on the transmission case; a piston arranged slidably in the cylinder, and defining, together with the cylinder, an oil chamber to be fed with the oil pressure; and a bearing arranged between the piston and the clutch for transmitting the thrust forces, as coming from the piston as the oil pressure is fed to the oil chamber, to the clutch while allowing the relative rotations between the piston and the clutch.

According to a second aspect of the present invention for achieving the second object, there is provided a vehicular automatic transmission for establishing a plurality of forward gear stages, comprising: a transmission case; an input shaft; a transmission mechanism connected to the input shaft and including a plurality of transmission elements; an output shaft connected to the transmission mechanism; a clutch connecting any one of the input shaft and the transmission elements individually in a driving manner; and a hydraulic servo for applying the clutch when fed with an oil pressure, wherein the transmission case encloses the transmission mechanism, the clutch and the hydraulic servo and includes side walls individually at both its axial end portions, wherein the hydraulic servo includes: a stationary type cylinder formed on at least one of the two side walls; a piston arranged slidably in the cylinder, and defining, together with the cylinder, an oil chamber to be fed with the oil pressure; and a bearing arranged between the piston and the clutch for transmitting the thrust force, as coming from the piston as the oil pressure is fed to the oil chamber, to the clutch, while allowing the relative rotations between the piston and the clutch, wherein the clutch includes a hub having outer circumference, to which a friction plate portion is splined, and a rim arranged at the radially outer side of the hub across the friction plate portion and having an inner circumference, to which the friction plate portion is splined, and wherein the input shaft is connected to the hub whereas one of the transmission elements is connected to the rim.

According to a third aspect of the present invention for achieving the third object, there is provided a vehicular automatic transmission wherein the transmission mechanism includes a flange portion arranged adjacent to the clutch for transmitting the thrust force, as transmitted from the piston to the clutch, to the input shaft, and wherein a second bearing for regulating the axial movements of the input shaft is interposed between the input shaft and the other of the two side walls.

According to a fourth aspect of the present invention for achieving the fourth object, there is provided a vehicular automatic transmission wherein the hub has a through oil passage for communicating the inner and outer circumferences of the hub to introduce the lubricating oil, as fed from the radially inner side thereof, to the friction plate portion.

According to a fifth aspect of the present invention for achieving the fifth object, there is provided a vehicular automatic transmission wherein the hydraulic servo includes a thrust member of annular disk shape interposed between the clutch and the bearing, and wherein the thrust member confronts the bearing at the inner circumferential portion and the clutch at the outer circumferential portion.

According to a sixth aspect of the present invention for achieving the sixth object, there is provided a vehicular automatic transmission wherein the hydraulic servo includes a return spring for applying such a thrust force to the piston as opposes the movement of the piston as the oil pressure is fed to the oil chamber, and wherein the return spring is arranged at the radially inner side of the clutch.

According to a seventh aspect of the present invention for achieving the seventh object, there is provided a vehicular automatic transmission wherein at least one of the input shaft and the transmission mechanism has a reaction member for transmitting the thrust force from the hydraulic servo through the clutch to the transmission case, wherein the hydraulic servo includes a return spring for applying such a thrust force to the piston as opposes the movement of the piston as the oil pressure is fed to the oil chamber, and a thrust member interposed between the clutch and the bearing, and wherein the return spring is arranged to axially abut against the thrust member at its one end and the reaction member at its other end.

According to an eighth aspect of the present invention for achieving the eighth object, there is provided a vehicular automatic transmission wherein the hydraulic servo includes a thrust member interposed between the clutch and the bearing, wherein the thrust member is so connected to the input shaft as not to relatively rotate but to axially slide, wherein the bearing includes a pair of races abutting against the piston and the thrust member, respectively, and wherein the race to abut against the thrust member has a lubricating oil receiving portion expanded cylindrically and radially inward of the thrust member.

According to the first aspect of the present invention, there is adopted the aforementioned stationary cylinder type hydraulic servo construction, by which the clutch of the automatic transmission is applied, so that the weight of the rotary members can be reduced to lighten the shifting shocks due to the inertial torque at the shifting time. Moreover, the oil chamber of the hydraulic servo is formed at the transmission case side so that a large size of the system can be avoided unlike the case of the centrifugal oil pressure offsetting chamber while reducing the inertia torque and avoiding the deterioration in the oil pressure control characteristics at the shifting time due to the establishment of the centrifugal oil pressure.

Next, according to the second aspect of the present invention, the input shaft is connected to the hub which is positioned in the inner circumference of the clutch so that the clutch is actuated directly by the hydraulic servo disposed at the transmission case side, to eliminate the aforementioned ununiformity of the bearing pressure and to shorten the axial size.

According to the third aspect of the present invention, moreover, the reaction is transmitted to one side wall whereas the thrust force from the hydraulic servo is transmitted through the clutch, the flange portion and the input shaft to the other side wall so that the axial force is supported at the two side walls of the transmission case while exerting no thrust force upon the remaining transmission mechanism. As a result, the members composing the transmission mechanism need not support the reaction so that the transmission mechanism can be made compact.

According to the fourth aspect of the present invention, moreover, the hub of the clutch will always rotate with the input shaft so that the oil, as fed from the radially inner side of the clutch, is stably fed via the through oil passage of the hub to the friction plate portion by the centrifugal force of the input shaft, to promote the lubrication thereby to improve the lubricating performance and the cooling effect.

According to the fifth aspect of the present invention, furthermore, there is provided the thrust member which abuts against the bearing at its inner circumferential portion and the clutch at its outer circumferential portion, so that the bearing and the clutch can be arranged at the optimum positions, as required.

According to the sixth aspect of the present invention, furthermore, by making use of the construction of claim 5, in which the clutch is necessarily arranged at the outer circumferential side, the return spring is arranged in the space which is formed in the inner circumferential side of the clutch, so that the automatic transmission can be made compact by the radial overlap arrangement of the return spring and the clutch.

According to the seventh aspect of the present invention, furthermore, the return spring is arranged between the reaction member and the thrust member so that the return spring acts to hold the clearance of the clutch at a constant level against the thrust force coming from the outside at the time of releasing the clutch. As a result, it is possible to prevent the deterioration in the controllability of the clutch and the shifting shocks, which might otherwise be caused by the dispersion of the clearances.

According to the eighth aspect of the present invention, furthermore, the thrust member is irrotationally connected to the input shaft rotating at all times, so that it always rotates with the input shaft. The race of the bearing at the side of the thrust member is in abutment against the thrust member so that it also rotates with the input shaft at all times. As a result, the oil is stably fed at all times to the bearing, as it is fed to the lubrication oil receiving portion of the race, by the centrifugal force accompanying the rotations of the race.

Other objects and remaining features and advantages of the present invention will become apparent from the following description to be made with reference to the accompanying drawings, in which:
Fig. 1 is a skeleton diagram showing the entire construction of a vehicular automatic transmission according to a first mode of embodiment of the present invention;
Fig. 2 is an operation diagram of the aforementioned transmission;
Fig. 3 is a skeleton diagram showing the entire construction of a vehicular automatic transmission according to a second mode of embodiment of the present invention;
Fig. 4 is an operation diagram of the aforementioned transmission;
Fig. 5 is a skeleton diagram showing the entire construction of a vehicular automatic transmission according to a third mode of embodiment of the present invention;
Fig. 6 is an operation diagram of the aforementioned transmission;
Fig. 7 is a skeleton diagram showing the entire construction of a vehicular automatic transmission according to a fourth mode of embodiment of the present invention;
Fig. 8 is an operation diagram of the aforementioned transmission;
Fig. 9 is a skeleton diagram showing the entire construction of a vehicular automatic transmission according to a fifth mode of embodiment of the present invention;
Fig. 10 is an operation diagram of the aforementioned transmission;
Fig. 11 is a section showing a portion of one clutch and its hydraulic servo of the vehicular automatic transmission according to the first mode of embodiment;
Fig. 12 is a section showing a portion of the clutch and its hydraulic servo of the vehicular automatic transmission according to the first mode of embodiment;
Fig. 13 is a skeleton diagram showing the entire construction of a vehicular automatic transmission according to a sixth mode of embodiment of the present invention;
Fig. 14 is an operation diagram of the aforementioned transmission;
Fig. 15 is a section showing a portion of one clutch and its hydraulic servo of the vehicular automatic transmission according to the sixth mode of embodiment;
Fig. 16 is an imaginary diagram for explaining an arrangement in which an input clutch is operated by a stationary cylinder type hydraulic servo according to the method of the prior art; and
Fig. 17 is an imaginary diagram for explaining another arrangement in which an input clutch is operated by a stationary cylinder type hydraulic servo according to the method of the prior art.

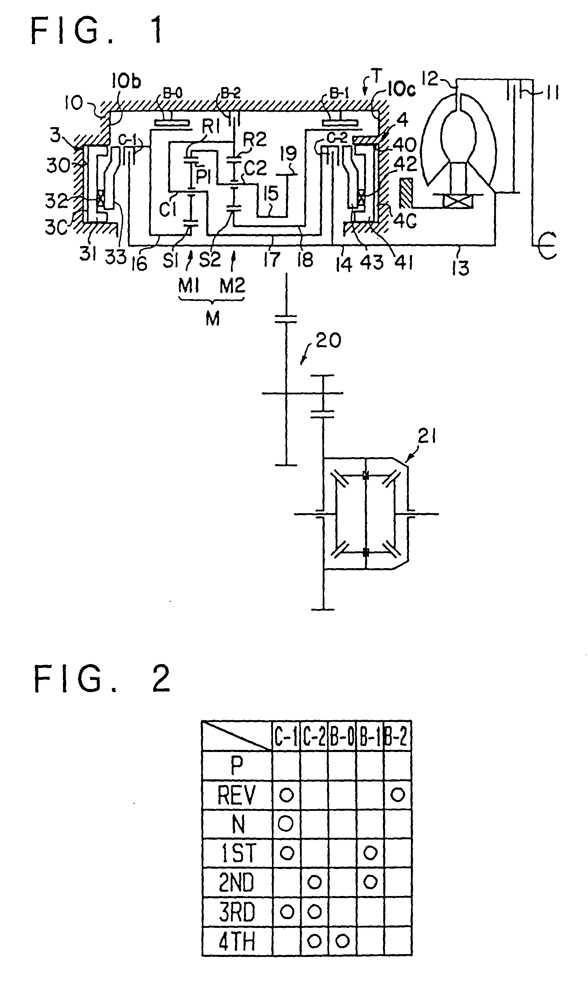

The modes of embodiment of the present invention will be described with reference to the accompanying drawings. First of all, the general construction of the first mode of embodiment will be described in the following. As shown in a skeleton in Fig. 1, this automatic transmission T for a vehicle is constructed to include: a transmission case 10; an input shaft 14; a transmission mechanism M connected to the input shaft 14 and composed of gear units M1 and M2 having a plurality of transmission elements (as will be herein described in detail); an output shaft 15 connected to the transmission mechanism M; clutches C-1 and C-2 for connecting the input shaft 14 and any two of the transmission elements to each other in a driving manner, that is, C-1 (for connecting the input shaft 14 to the sun gear S1 in the driving manner in the present embodiment) and C-2 (for connecting the is to a carrier C1 in the driving manner); and hydraulic servos 3 and 4 for bringing the clutches C-1 and C-2, when supplied with the oil pressure, into respective engagements, thereby to establish a plurality of (e.g., four in the present embodiment) forward gear stages.

The transmission case 10 envelopes the transmission mechanism M, the paired clutches C-1 and C-2, the paired hydraulic servos 3 and 4, and the remaining related mechanisms, as will be described in detail hereinafter, and includes side walls 10a and 10b individually at its two axial end portions.

The hydraulic servos 3 and 4 include: cylinders 30 and 40, which are formed on the respective side walls 10a and 10b of the transmission case 10; pistons 31 and 41 which are slidably arranged in the cylinders 30 and 40 and associated with the cylinders 30 and 40 to define oil chambers 3C and 4C to be supplied with the oil pressure; and bearings 32 and 42 which are arranged between the pistons 31 and 41 and the clutches C-1 and C-2 to allow relative rotations between the pistons 31 and 41 and the clutches C-1 and C-2 and to transmit-the thrusting forces, as the oil pressure is supplied to the oil chambers 3C and 4C, from the pistons 31 and 41 to the clutches C-1 and C-2.

As operationally tabulated in Fig. 2, in the present embodiment, the clutch C-1 is applied when the first speed (1ST) and the third speed (3RD) of a plurality of (i.e., four speeds in this embodiment) forward gear stages are to be established, and is released when the gear stage is shifted to the second speed (2ND) and the fourth speed (4TH). The clutch C-2 is applied at the time of establishing the second to fourth speeds and is released at the time of shifting to the first speed.

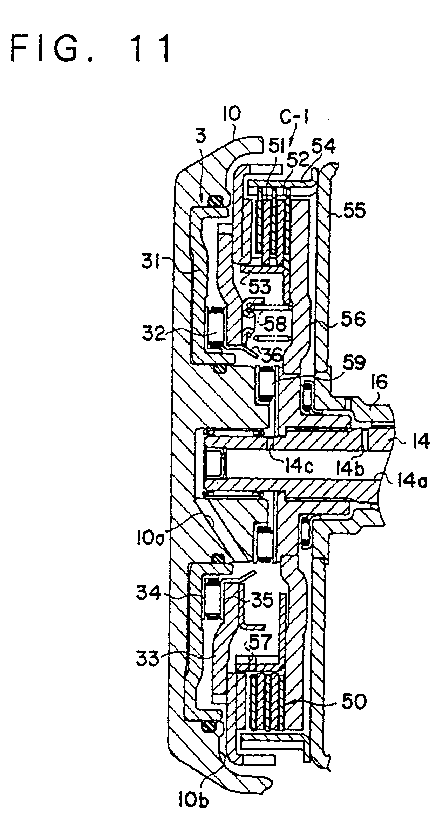

As shown in detail in Fig. 11, the clutch C1 includes: a hub 53 having an outer circumference, to which a plurality of friction members 51 of a friction plate portion 50 having a plurality of separator plates 52 arranged axially alternately of the friction members 51 are splined; and a rim 54 arranged at the radially outer side of the hub 53 across the friction plate portions 50 and having an inner circumference to which the separator plates 52 of the friction plate portions 50 are splined. Moreover, the input shaft 14 is connected through a radial flange portion 56 to the hub 53. This radial flange portion 56 is arranged adjacent to the clutch C-1 in the transmission mechanism and is irrotationally splined to the input shaft 14 so as to perform a function to transmit the thrust force, as transmitted from the piston 31 through the clutch C-1, to the input shaft 14. Moreover, the radial flange portion 56 is held in abutment against the step portion of the input shaft 14 so that it is regulated to move in one axial direction, i.e., away from the arrangement of the hydraulic servo (i.e., rightward of the drawing). On the other hand, the sun gear S1 (as shown in Fig. 1), i.e., one of the transmission elements is connected through a sun gear shaft 16 and the drum 55 of a brake B-0 to the rim 54. Moreover, the hub 53 has a through oil passage 57 extending through the inner and outer circumferences of the hub 53 so as to introduce the lubrication oil, as fed from the radially inner side, to the friction plate portion 50.

The hydraulic servo 3 has a thrust member 33 of an annular disk shape which is arranged between the clutch C-1 and the bearing 32 such that it confronts the bearing 32 at its inner circumferential portion and the clutch C-1 at its outer circumferential portion. In the present embodiment, more specifically, the thrust member 33 has such an abutment portion against the separator plates 52 at one side of its radially outer side as is so splined like the friction members 51 at its inner circumference to the hub 53 connected to the input shaft 14 as not to rotate relative to the hub but to slide in the axial directions. The bearing 32 has a pair of races 34 and 35 which abut against the piston 31 and the thrust member 33, respectively. The race 35, as abuts against the thrust member 33, is cylindrically expanded from the radially inner side of the roller supporting face radially inward of the thrust member 33 to form a lubrication oil receiving portion 36 which is radially reduced in a frusto-conical shape at its leading end in the present embodiment.

The hydraulic servo 3 has a return spring 58 for applying such a thrust force to the piston 31 as opposes the movement of the piston 31 as the oil pressure is fed to the oil chamber 3C. The thrust member 33 is so splined at the aforementioned abutment portion to the input shaft 14 in the present embodiment as not to rotate relatively but to slide in the axial direction. The return spring 58 is so arranged radially inward of the clutch C-1 that its one end axially abuts against the inner circumferential portion of the thrust member 33 through a spring seat whereas its other end against the radial flange portion 56 leading to the input shaft 14. In Fig. 11, reference characters 14a to 14c designate in-shaft oil passages for feeding the lubrication oil from the shaft center to the individual portions, and reference characters 10a also designate an in-housing oil passage, although the oil passage for feeding the working oil to the hydraulic servo 3 is not shown.

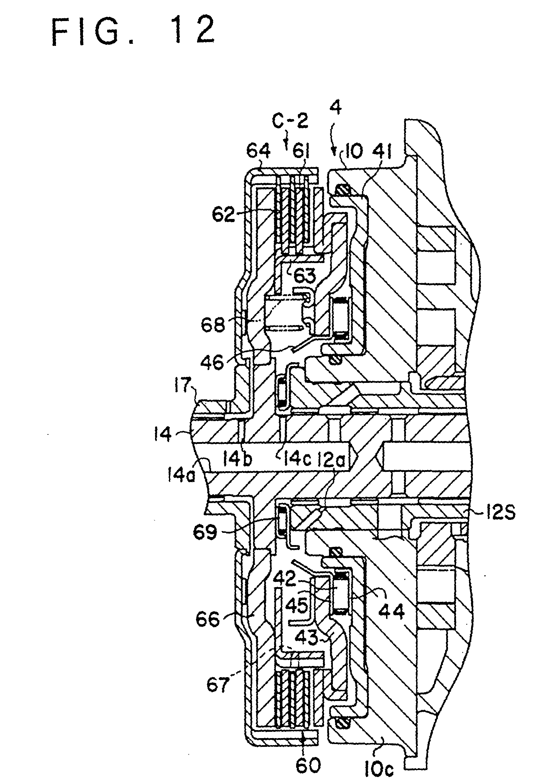

The clutch C-2 and its hydraulic servo 4, as shown in detail in Fig. 12, are constructed essentially like the aforementioned clutch C-1 and its hydraulic servo 3 so that the description of their common portions will be omitted by the designations using similar reference characters in which only the head numerals of the individual characters are replaced by 4 and 6. However, the clutch C-2 is different only in that the input shaft 14 and the carrier C1 or one of the transmission elements are connected in a driving manner by the action of the hydraulic servo 4 through a drum-shaped rim 64 and a carrier shaft 17. In this case, moreover, an oil passage corresponding to the oil passage 10a is the oil passage 12a which is formed in a stator shaft 12S.

As seen with reference to Figs. 11 and 12 together, second bearings 69 (as shown in Fig. 12) 59 (as shown in Fig. 11) for regulating the axial movements of the input shaft 14 are interposed between the input shaft 14 and the other of the two side walls 10b and 10c, that is, between the radial flange portion integral with the input shaft 14 shown in Fig. 12, if the side wall 10b is deemed as one, and the radial flange portion located at the end portion of the stator shaft 12S and abutting against the side wall 10c, and between the radial flange portion 56 abutting against the step portion of the input shaft 14 shown in Fig. 11, if the side wall 10c is deemed as one, and the side wall 10b.

Reverting to Fig. 1, here will be described the overall construction of the gear train of the aforementioned automatic transmission T. This automatic transmission T includes: a torque converter 12 having a lockup clutch 11; two planetary gear sets M1 and M2; brakes B-0 to B-2; and the aforementioned clutches C-1 and C-2. The respective ring gears R1 and R2 and carriers C2 and C1 of the two gear sets M1 and M2 are connected to each other, and the sun gear S1 and the carrier C1 of the gear set M1 are connected as input elements through the clutches C-1 and C-2, respectively, to the input shaft 14 leading to the turbine shaft 13 of the torque converter 12. The ring gear R1 and the carrier C3, as connected to each other, are connected through the output shaft 15 to the counter drive gear 19 acting as an output element. Moreover, the sun gear S1 of the gear set M1 can be fixed on the transmission case 10 by the brake B-0, and the sun gear S2 of the gear set M2 can also be fixed on the transmission case 10 by the brake B-1. The ring gear R2, as connected to the carrier C1, can be fixed on the transmission case 10 by the brake B-2, too. In the present embodiment, more specifically: the sun gear S1 is connected to the clutch C-1 through the sun gear shaft 16 which is fitted around the input shaft 14; the carrier C1 is connected to the clutch C-2 through the carrier shaft 17 which is fitted around the input shaft 14; and the sun gear S2 is connected to the brake B-1 through a sun gear shaft 18 which is fitted around the carrier shaft 17. Moreover, the brakes B-0 and B-1 are given band brake constructions but for the brake B-2 which is given a wet type multiple disk construction, although not limited thereto. Incidentally, the output gear 19 of this embodiment is connected through a counter gear 20 to a differential unit 21 to construct a transmission having a horizontal construction.

Under the control of the not-shown hydraulic control system, the transmission thus constructed feeds the oil pressure to the hydraulic servos corresponding to the individual clutches and brakes, to apply (as indicated by circle symbols) and release (as indicated by blanks) them thereby to establish the individual gear stages, as tabulated in Fig. 2. Specifically, the first speed (1ST) is established when the clutch C-1 and the brake B-1 are applied. At this stage, the rotation of the input shaft 14 is transmitted through the clutch C-1 to the sun gear S1 and is outputted as the rotation of the carrier C2, which is most decelerated by the fixation of the sun gear S2 with the brake B-1 being applied, to the output gear 19. On the other hand, the second speed (2ND) is established when the clutch C-2 and the brake B-1 are applied. At this stage, the input, as transmitted through the clutch C-2 to the carrier shaft 17, is introduced as it is through the carrier C1 into the ring gear R2, until it is outputted as the differential rotation of the carrier C2, which exemplifies a reaction element by the sun gear S2 fixed by the applied brake B-1, to the output gear 19. The third speed (3RD) is established by the direct connection of the gear set M1, as achieved by the applications of the two clutches C-1 and C-2. At this stage, the rotation of the input shaft 14 is outputted, as it is, as the rotation of the carrier C2 to the output gear 19. The fourth speed (4TH) by the overdrive is established when the clutch C-2 and the brake B-0L for fixing the sun gear S1 are applied. At this stage, the rotation of the input shaft 14 is transmitted as the rotation of the ring gear R1, which is speeded up by the revolution of the pinion gear P1 with respect to the rotation of the carrier C1, from the carrier C2 to the output gear 19.

On the other hand, the reverse (REV) is established when the clutch C-1 and the brake B-2 are applied. At this stage, the rotation of the ring gear R1, as decelerated and reversed from the input of the sun gear S1 by the fixation of the carrier C1, is outputted through the carrier C2 from the output gear 19.

When the oil chambers 3C and 4C are fed with the oil pressure from the not-shown in-housing oil passage, the pistons 31 and 41 are actuated by the two clutches C-1 and C-2 according to the present invention, to transmit the thrust forces from the pistons 31 and 41 to the friction plate portions 50 and 60 through the bearings 32 and 42, as arranged between the pistons 31 and 41 and the clutches C-1 and C-2, while allowing the relative rotations between themselves and the pistons 31 and 41, so that the clutches C-1 and C-2 are applied. In this engagement, the thrust force, as applied to the clutch C-1, is transmitted to the input shaft 14 through the radial flange portion 56, as shown in Fig. 11, and is supported by the case side wall 10c at the opposite side through the bearing 69, as shown in Fig. 12. On the contrary, the thrust force, as applied to the clutch C-2, is transmitted to the input shaft 14 through a radial flange portion 66 and is supported by the case side wall 10b at the opposite side through the bearing 59. Thus, the input shaft 14 and its two radial flange portions 56 and 66 perform the rules as the reaction members. As a result, the thrust forces for applying the clutches C-1 and C-2 individually will not act upon the transmission mechanism M which is connected to the rims 54 and 64 of the two clutches C-1 and C-2.

Thus, according to the aforementioned mode of embodiment, the hydraulic servos 3 and 4 are given the construction of the stationary cylinder type, and the clutches C-1 and C-2 of the automatic transmission T are applied by those hydraulic servos. As a result, the weights of the sun gear shaft 16, the carrier shaft and their relatives can be reduced to lighten the shift shocks which are caused by the inertia torque at the shifting time. Since, moreover, the oil chambers 3C and 4C of the hydraulic servos 3 and 4 are formed at the side of the transmission case 10, the large size of the system is avoided unlike the case, in which the centrifugal oil pressure offsetting chamber is formed, while reducing the inertial torque and avoiding the deteriorations in the oil pressure control characteristics at the shifting time due to the centrifugal oil pressure.

Since, moreover, the input shaft 14 is connected to the hubs 53 and 63 which are positioned at the inner circumferences of the clutches C-1 and C-2, the friction plate portions 50 and 60 of the clutches C-1 and C-2 can be thrust uniformly all over the circumference through the bearings 32 and 42 and the thrust members 33 and 43 by the hydraulic servos 3 and 4 disposed at the side of the transmission case 10, so that the ununiformity of the bearing pressure is eliminated at the time of applying the clutches. Still moreover, the entire axial size of the transmission can be shortened because the hydraulic servos 3 and 4 are buried in the side walls 10b and 10c.

Furthermore, the thrust force coming from the hydraulic servo 3 (4), as taking the reaction at one side wall 10b (10c), is transmitted through the clutch C-1 (C-2), the flange portion 56 (66) and the input shaft 14 to the other side wall 10c (10b), and the axial force is supported at the two side walls 10b and 10c of the transmission case 10 so that the thrust force will not act upon the other transmission mechanism M. As a result, the members composing the transmission mechanism M need not support the reaction so that the transmission mechanism can be made compact.

Since, furthermore, the hubs 53 and 63 of the clutches C-1 and C-2 rotate together with the input shaft 14 at all times, the oil, as fed from the radially inner sides of the clutches C-1 and C-2 via the lubrication oil passages 14a and 14b of the input shaft 14, is stably fed to the friction plate portions 50 and 60 via the through oil passages 57 and 67 of the hubs 53 and 63 so that the oil acts in the direction to promote the lubrication thereby to improve the lubricating performance and the cooling effect.

Thanks to the thrust members 33 and 43 which abut against the bearings 32 and 42 at their inner circumferential portions and the friction plate portions 50 and 60 of the clutches C-1 and C-2 at their outer circumferential portions, furthermore, the bearings 32 and 42 and the clutches C-1 and C-2 are arranged at the optimum positions, as required.

By making use of the aforementioned construction in which the clutches C-1 and C-2 are arranged at the outer circumferential side, furthermore, the return springs 58 and 68 are arranged in the spaces which are formed at the inner circumferential sides of the clutches C-1 and C-2, so that the automatic transmission is made compact by the radially overlap arrangement of the return springs 58 and 68 and the clutches C-1 and C-2.

Since, furthermore, the return springs 58 and 68 are arranged between the reaction members 56 and 66 and the thrust members 33 and 43, at the time of releasing the clutches C-1 and C-2, they act to hold such clearance to a constant level against the thrust force from the outside, i.e., from the sun gear S1 having the helical gear, for example, as is established between the friction members 51 of the friction plate portions 50 and 60 of the clutches C-1 and C-2 and the separator plates 52, thereby to make it possible to prevent the deteriorations in the controllabilities of the clutches C-1 and C-2 due to the dispersion of the clearances and the accompanying shifting shocks.

Furthermore, the thrust members 33 and 43 are so connected to the input shaft 14 rotating at all times as not to rotate relative thereto, so that they always rotate together with the input shaft 14. The races 35 and 45 of the bearings 32 and 42 at the sides of the thrust members 33 and 43 are in abutment against the thrust members 33 and 43 so that they likewise rotate together with the input shaft 14 at all times. As a result, the oil, as fed to the lubrication oil receiving portions 36 and 46 of the races 35 and 45, is stably fed to the bearings 32 and 42 at all times by the centrifugal force accompanying the rotations of the races 35 and 45.

Incidentally, according to the system of the aforementioned mode of embodiment, the working oil can be fed directly from the (not-shown) oil port of the case 10, and no seal ring is required because of absence of the relative rotary portion of the prior art connecting the oil port and the oil chambers 3C and 4C. As a result, it is possible to avoid the drop in the efficiency due to the dragging loss of the seal ring and the increase in the oil pump capacity for compensating the oil leakage. Since the hubs 53 and 63 at the input side are disposed at the inner circumferential side, the friction plate portions 50 and 60 can always be fed with the lubrication oil to raise an advantage of improvements in the neutral control and the durability in the quick engagement and start.

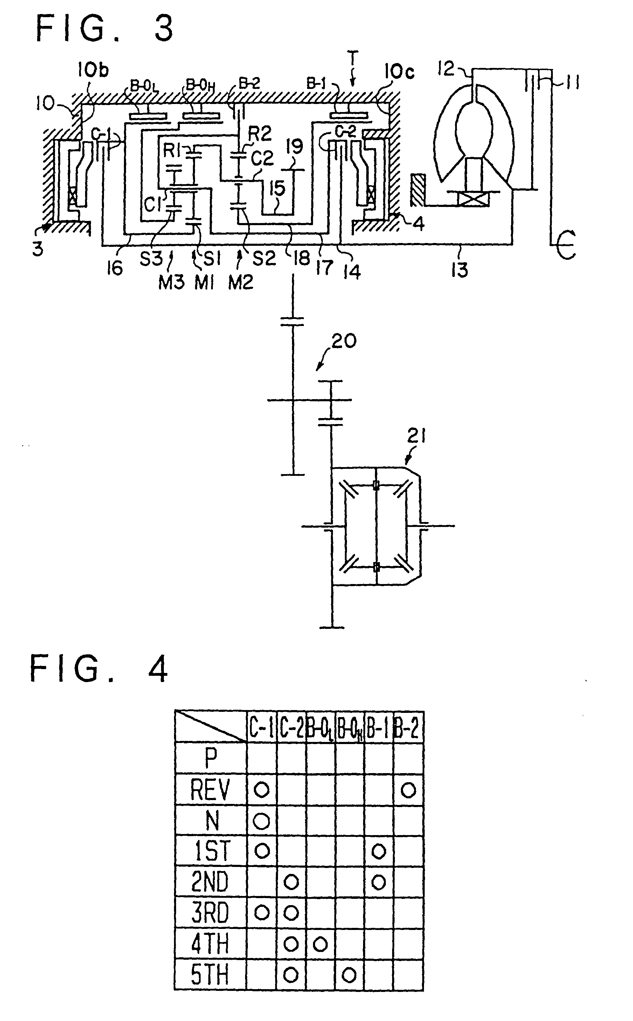

Next, Fig. 3 is a skeleton diagram showing a vehicular automatic transmission T according to a second mode of embodiment of the present invention. In this embodiment, in order to output two low and high stages of the ring gear R1 of the first mode of embodiment, the gear unit M1 is accompanied by a planetary gear unit M3 which shares the pinion shaft and the carrier C1 but has different gear ratios, and a sun gear S3 is fixed on the case 10 by a band brake B-0H. In accordance with this modification, the brake corresponding to the aforementioned brake B-0 is designated at reference characters B-0L. Since the remaining constructions are similar to the aforementioned ones of the first mode of embodiment, the description of the individual portions will be omitted by designating the corresponding members by similar reference numerals or letters.

With this construction, the forward gear stages have five speeds, as tabulated in the operation diagram of Fig. 4. Specifically, the operations up to the fourth speed are identical to those of the foregoing first mode of embodiment, and the fifth speed is established by applying the brake B-0H in place of the brake B-0L. With this construction, too, it is possible to achieve effects similar to those of the first mode of embodiment.

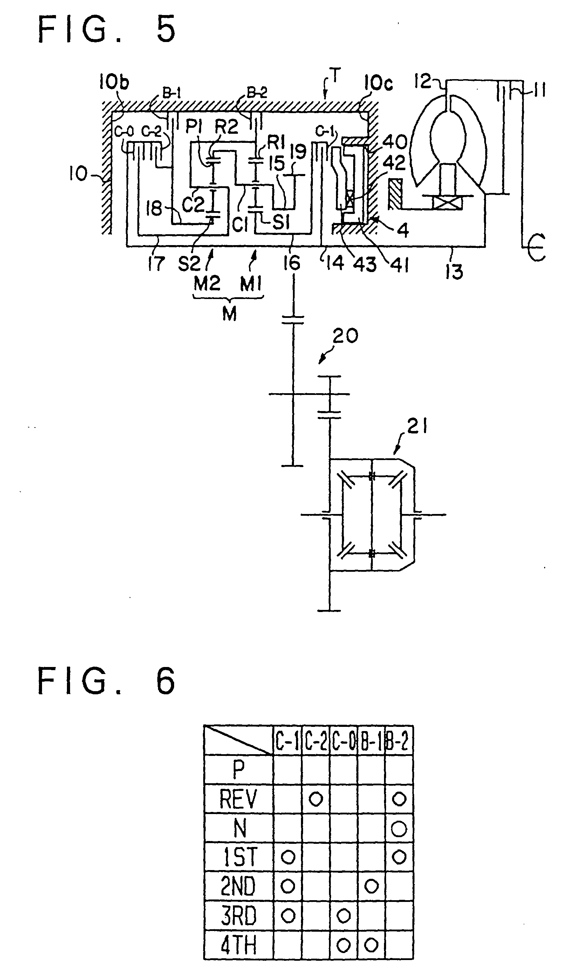

Next, Fig. 5 is a skeleton diagram showing a vehicular automatic transmission T according to a third mode of embodiment of the present invention. Although a gear unit array similar to that of the first mode of embodiment is adopted in this embodiment, the driving connection relations of the transmission elements to the input shaft 14 are partially changed to establish the four forward speeds by the three clutches and the two brakes. In the case of this embodiment, it is similar to the first mode of embodiment that the ring gears R1 and R2 and the carriers C2 and C1 of the two gear units M1 and M2 are connected to each other, but the sun gear S1 of the gear unit M1 and the carrier C2 of the gear unit M2 are connected to the input shaft 14 through the clutches C-1 and C-2, respectively, so that they may act as the input elements. The carrier C1 and the ring gear R2, as connected to each other, are connected to the output shaft 15. Moreover, the sun gear S2 of the gear unit M2 can be fixed on the transmission case 10 by the brake B-1 and is connected to the input shaft 14 through the reverse clutch C-2, and the ring gear R1, as connected to the carrier C2, can also be fixed on the transmission case 10 by the brake B-2. The remaining constructions are similar to the aforementioned ones of the first mode of embodiment, and the description of their portions will be omitted by designating the corresponding members by similar reference numerals or letters.

With this construction, the forward gear stages have the four speeds, as tabulated in the operation diagram of Fig. 6. Specifically, the first speed (1ST) is established by applying the clutch C-1 and the brake B-2, and the input of the sun gear S1 is then the decelerated output of the carrier C1 due to the fixation of the ring gear R1. The second speed (2ND) is established by applying the clutch C-1 and the brake B-1, and the input of the sun gear S1 is outputted as the differential rotation of the carrier C1 using the fixed sun gear S2 as the reaction element. The third speed (3RD) is established by the direct connection of the gear unit M1, as caused by applying the two clutches C-1 and C-2. At this time, the rotation of the input shaft 14 is outputted, as it is, as the rotation of the carrier C1. The overdrive or fourth speed (4TH) is established by applying the clutch C-0 and the brake B-1 for fixing the sun gear S2. At this time, the rotation of the input shaft 14 is transmitted, as the rotation of the ring gear R2 which is accelerated by the revolution of the pinion gear P1 from the rotation of the carrier C2, from the carrier C1 to the output gear 19. Incidentally, the reverse stage (REV) is established by applying the clutch C-2 and the brake B-2, and the rotation of the ring gear R2, as reversed and decelerated by the fixation of the carrier C2 from the input of the sun gear S2, is then outputted through the carrier C1. Thus, effects similar to those of the first mode of embodiment can be achieved even if such construction is adopted.

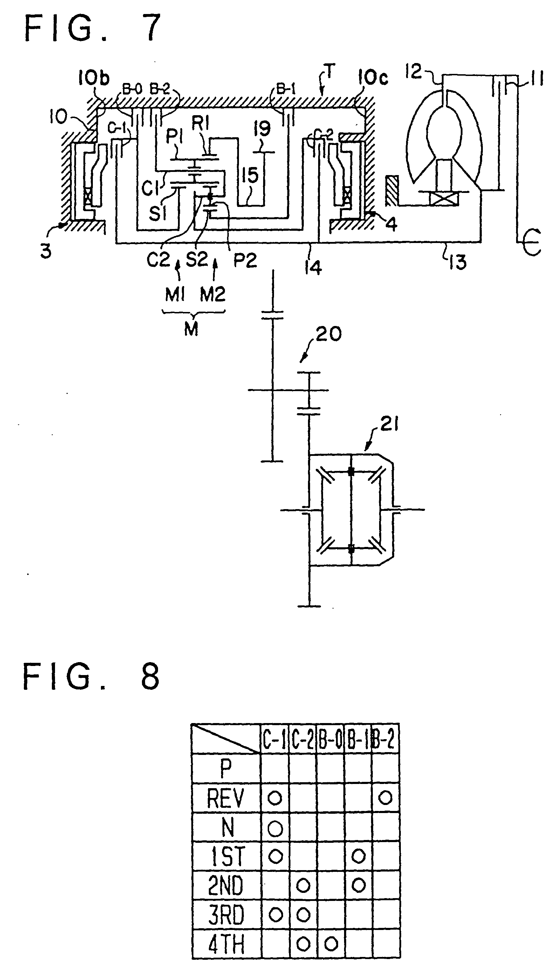

Next, Fig. 7 is a skeleton diagram showing a vehicular automatic transmission T according to a fourth mode of embodiment of the present invention. This embodiment employs the Ravignaux gear mechanism as the transmission mechanism M, which includes: the first planetary gear set M1 composed of the sun gear S1, the ring gear R1 and the pinion gear P1 supported by the carrier C1 and meshing with them; and the second planetary gear set M2 composed of the sun gear S2, the ring gear R1 shared with the first planetary gear set M1, the pinion gear P1 shared with the first planetary gear set M1, and the pinion gear P2 meshing with the pinion gear P1 and the sun gear S2, such that the carrier C1 supporting the pinion gear P1 and the carrier C2 supporting the pinion gear P2 are connected to each other. Moreover: the sun gear S1 is connected in a driven manner to the input shaft 14 through the clutch C-1 and can be fixed on the case 10 by the brake B-0; the carrier C2 is connected in a driven manner to the input shaft 14 through the clutch C-2; and the ring gear R1 is connected to the output shaft 15. Still moreover, the sun gear S2 can be fixed on the case 10 by the brake B-1, and the carrier C1 can be fixed on the case 10 by the brake B-2. The remaining construction is similar to the aforementioned one of the first mode of embodiment so that the description of the construction of the individual portions is omitted by designating the corresponding members by similar reference numerals or letters.

With this construction, the forward gear stages have the four speeds, as tabulated in the operation diagram of Fig. 8. The relations of this embodiment between applications/releases of the individual clutches and brakes and the gear stages to be established are similar to the aforementioned ones of the first mode of embodiment, and effects similar to those of the first mode of embodiment can be achieved even with such construction.

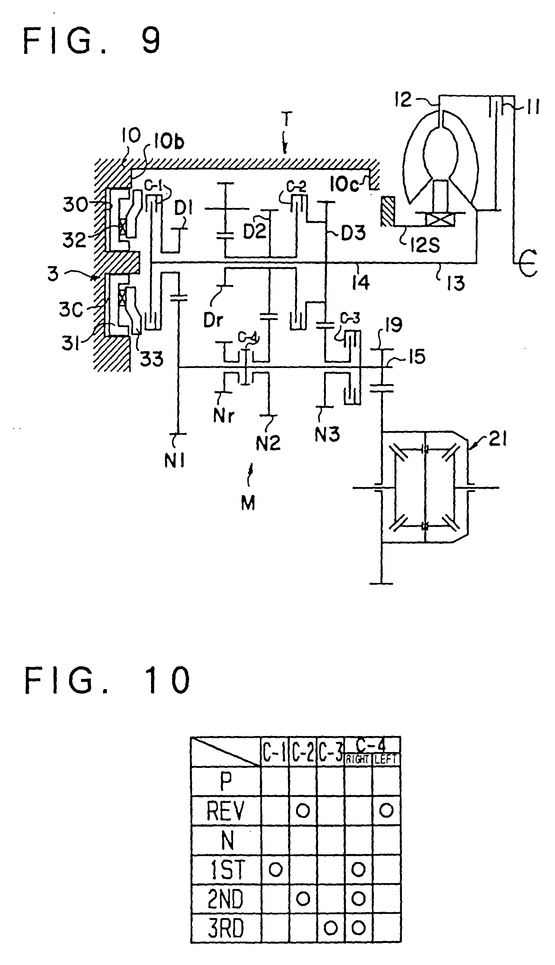

Next, Fig. 9 is a skeleton diagram showing a vehicular automatic transmission according to a fifth mode of embodiment of the present invention. This embodiment is different from the foregoing four embodiments in that an always meshing type gear mechanism is used as the transmission mechanism M. Only a driving large gear D3 for achieving the third speed is fixed on the input shaft 14, and a driving small gear D1, a driving medium gear D2 and a driving reverse gear Dr for establishing the first and second speeds and the reverse stage are loosely fitted on the input shaft 14. On the other hand, only a driven large gear N1 meshing with the driving small gear D1 is fixed on the output shaft 15, and a driven medium gear N2 meshing with the driving medium gear D2, a driven small gear N3 meshing with the driving large gear D3 and a driven reverse gear Nr meshing with the driving reverse gear Dr are all loosely fitted on the output shaft 15. At the side of the input shaft 14, moreover, the driving small gear D1 is connected to the input shaft 14 through the clutch C-1, and the driving medium gear D2 and the driving reverse gear Dr are connected to the input shaft 14 through the clutch C-2. At the side of the output shaft 15, the driven small gear N3 is connected to the output shaft 15 through a clutch C-3, and the driven medium gear N2 and the driven reverse gear N4 can be selectively connected to the output shaft 15 through a meshing clutch C-4. The construction of the clutch C-1 in this embodiment is similar to that which has been described in the first mode of embodiment with reference to Fig. 11, and the description of the individual portions will be omitted by designating the corresponding members by similar reference numerals or letters.

With this construction, the forward gear stages take the three speeds, as tabulated in the operation diagram of Fig. 10. Specifically, the first speed (1ST) is established by the connection between the input shaft 14 and the driving small gear D1, as effected by applying the clutch C-1. At this time, the rotation of the input shaft 14 is decelerated by the driving small gear D1 and the driven large gear N1 and is transmitted to the differential unit 21 from the output gear 19 of the output shaft 15. The second speed (2ND) is established by the application of the clutch C-2 and the meshing of the clutch C-4 with the driven medium gear N2 at the side of the output shaft 15. At this time, the rotation of the input shaft 14 is decelerated and outputted by the driving medium gear D2 and the driven medium gear N2. The third speed (3RD) is established by the application of the clutch C-3. At this time, the rotation of the input shaft 14 is accelerated and outputted by the driving large gear D3 at the side of the input shaft 14 and the driven small gear N3 at the side of the output shaft 15. Incidentally, the reverse stage (REV) is established by the meshing engagement of the clutch C-2 and the clutch C-4 with the driven reverse gear N4 at the side of the output shaft 15. Even with this construction adopted, the inertial torque relating to the drive small gear D1 is reduced to provide effects similar to those of the first mode of embodiment.

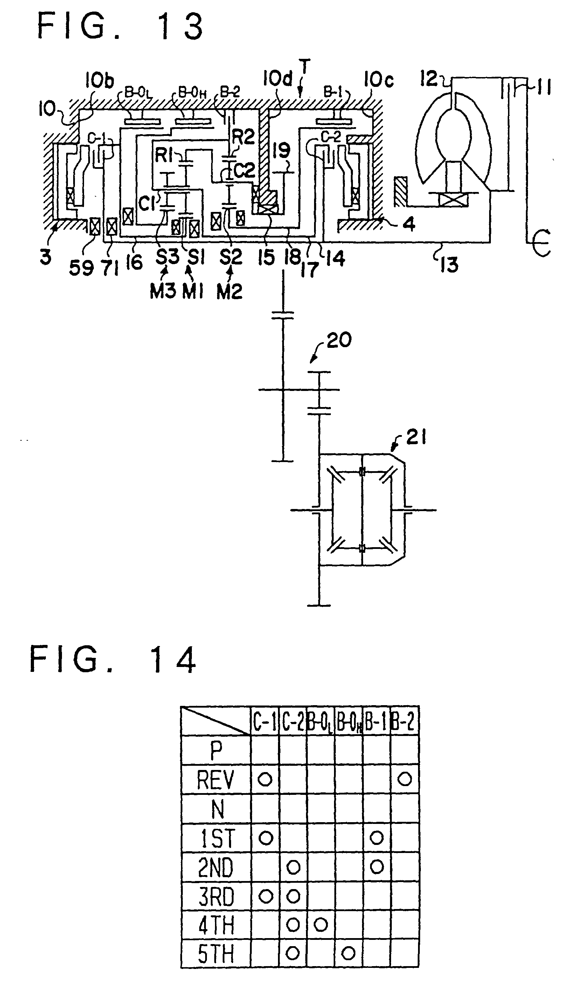

Finally, Fig. 13 is a skeleton diagram showing a vehicular automatic transmission T according to a sixth mode of embodiment of the present invention. This embodiment is given a gear train construction substantially similar to that of the foregoing second mode of embodiment but is different in the reaction receiving structure. In this embodiment, the thrust force to be applied to the clutch C-1 is borne by a center support 10d which supports the output shaft 15 finally through a multiple stage thrust bearing interposed in the transmission mechanism. The reason for adopting this reaction support construction will be described in comparison with the second mode of embodiment. When the thrust forces in the two directions, as applied to the individual clutches C-1 and C-2 by the common input shaft 14 in the second mode of embodiment, are to be transmitted to the case side walls 10c and 10b, these clutches become difficult to control because the thrust forces exert influences upon the other clutches through the input shaft 14 at the so-called "clutch-to-clutch operation" time (which is effected in this embodiment from the first speed (1ST) to the second speed (2ND) or vice versa, as seen from Fig. 4) in which one clutch is applied while the other being released.

In the present sixth mode of embodiment, therefore, the thrust force to be applied to the clutch C-2 is likewise borne by the side wall 10b of the transmission case from the input shaft 14 through the flange portion 56 and the bearing 59, and the thrust force to be applied to the clutch C-1 is borne by the center support 10d which finally supports the output shaft 15, through the multiple-stage thrust bearing arranged, as generally indicated in Fig. 13.

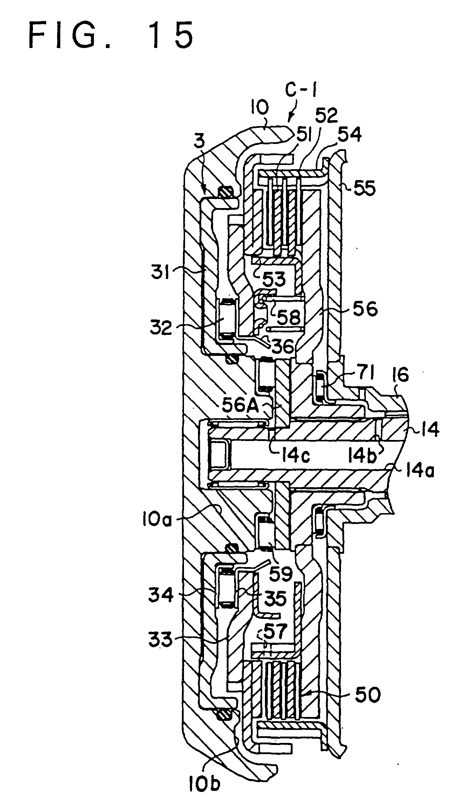

In the case of this mode of operation, the construction relating to the clutch C-2 is essentially similar to those of the foregoing individual modes of embodiments, as shown in detail in Fig. 4. As shown in detail in Fig. 15, on the other hand, the construction, as adopted for the clutch C-1, is slightly different due to the difference in the mode of supporting the reaction. Specifically, the radial flange portion 56 is so irrotationally splined to the input shaft 14 as to move in the axial directions. In place of this, there is fitted on the input shaft 14 a flange 56A which acts as a reaction member to abut against the step portion of the input shaft 14. This flange 56A transmits the thrust force from the clutch C-2, as received by the input shaft 14, to the side wall 10b through the thrust bearing 59 which is interposed between the flange 56A and the side wall 10a of the case 10. On the other hand, the thrust force to be received by the clutch C-1 is transmitted not to the aforementioned flange 56A but to the sun gear shaft 16 from the radial flange portion 56 through a thrust bearing 71 until it is finally received by the center support through the individual thrust bearings which are arranged in the transmission mechanism, as shown in Fig. 13. In this mode, therefore, the input shaft 14, together with the flange portion 66 of the transmission mechanism M and the flange 56A, acts as the reaction member against the clutch C-2, and the transmission mechanism M, together with the flange portion 56, acts as the reaction member against the clutch C-1. The remaining constructions are similar to those of the aforementioned second mode of embodiment, and the descriptions of the constructions of the individual portions will be omitted by designating the corresponding members by similar reference numerals or letters.

With this construction, the individual gear stages are similar to those of the aforementioned second mode of embodiment, as tabulated in the operation diagram of Fig. 14. At the aforementioned clutch-to-clutch operation time, moreover, no influence of the thrust force is exerted upon the other clutches through the input shaft 14. Thus, especially this mode of embodiment is advantageous in the feasible hydraulic controls of the clutches C-1 and C-2. The remaining effects are similar to those of the second mode of embodiment.

Although the present invention has been described in connection with the six modes of embodiment in which the transmission mechanism is modified in the various manners and in which the reaction support construction is partially modified, it should not be limited to the transmission mechanisms, as exemplified in the foregoing modes of embodiment, but can be variously modified in its specific construction within the scope of the claim and widely applied to various transmission mechanisms. Moreover, although the foregoing individual embodiments of the present invention have exclusively exemplified the cases in which the input shaft and the transmission elements are mutually connected in the driving manner, the present invention can naturally be applied to the clutches for connecting the transmission elements of the transmission mechanism to each other in the driving manner.

## Claims

1. A vehicular automatic transmission (T) for establishing a plurality of forward gear stages, comprising:
a transmission case (10); an input shaft (14); a transmission mechanism (M) connected to said input shaft and including a plurality of transmission elements; an output shaft (15) connected to said transmission mechanism (M); a clutch (C-1, C-2, respectively) connecting said input shaft (14) to one of said transmission elements in a driving manner; and a hydraulic servo (3, 4, respectively) for activating said clutch (C-1, C-2, respectively) when fed with an oil pressure,
wherein said transmission case (10) encloses said transmission mechanism (M), said clutch (C-1, C-2) and said hydraulic servo (3, 4) and includes two axially spaced side walls (10c, 10b) so as to confront each other,
wherein said input shaft (14) extends from one of said side walls (10c) to the other side wall (10b), axially opposite said one of said side walls, through said transmission mechanism (M),
wherein said hydraulic servo (3, 4) includes:
a stationary type cylinder (30, 40, respectively) formed on said one (10b, 10c, respectively) of said side walls;
a piston (31, 41, respectively) arranged slidably in said cylinder (30, 40, respectively), and defining, together with said cylinder, an oil chamber (3C, 4C, respectively) to be fed with oil pressure;
a first bearing (32) arranged between said piston (31) and said clutch (C-1) for transmitting the thrust forces, as coming from said piston (31) when the oil pressure is fed to said oil chamber (3C), to said clutch (C-1) while allowing relative rotations between said piston and said clutch;
a flange portion (56) arranged adjacent to said clutch (C-1) for transmitting the thrust force, as transmitted from said piston (31) through said clutch (C-1), to said input shaft (14), and
wherein a second bearing (42) for regulating the axial movements of said input shaft (14) is interposed between said input shaft (14) and the other (10c) of said two side walls.

2. A transmission according to claim 1,
wherein said clutch (C-1) includes a hub (53) having an outer circumference, to which a friction plate portion (50) is splined, and a rim (54) arranged at the radially outer side of said hub (53) across said friction plate portion (50) and having an inner circumference, to which said friction plate portion (50) is splined, and
wherein said input shaft (14) is connected to said hub (53) whereas one of said transmission elements is connected to said rim (54).

3. A transmission according to claim 2,
wherein said hub (53) has a through oil passage (57) for communicating the inner and outer circumferences of said hub (53) to introduce the lubricating oil, as fed from the radially inner side thereof, to said friction plate portion (50).

4. A transmission according to any of claims 1 to 3,
wherein said hydraulic servo (3) includes a thrust member (33) of annular disk shape interposed between said clutch and said first bearing (32), and
wherein said thrust member (33) confronts said first bearing (32) at the inner circumferential portion and said clutch (C-1) at the outer circumferential portion.

5. A transmission according to claim 4,
wherein said hydraulic servo (3) includes a return spring (58) for applying such a thrust force to said piston (31) as opposes the movement of said piston as the oil pressure is fed to said oil chamber (3C), and
wherein said return spring (58) is arranged at the radially inner side of said clutch (C-1).

6. A transmission according to any of claims 1 to 5,
wherein said hydraulic servo (3) includes a return spring (58) for applying such a thrust force to said piston (31) as opposes the movement of said piston as the oil pressure is fed to said oil chamber (3C), and a thrust member (33) interposed between said clutch (C-1) and said first bearing (32), and
wherein said return spring (58) is arranged to axially abut against said thrust member (33) at its one end and said flange portion (56) at its other end.

7. A transmission according to any of claims 1 to 6,
wherein said hydraulic servo (3) includes a thrust member (33) interposed between said clutch (C-1) and said first bearing (32),
wherein said first bearing (32) includes a pair of races (34, 35) abutting against said piston (31) and said thrust member (33), respectively, and
wherein the race (35) to abut against said thrust member (33) has a lubricating oil receiving portion (36) expanded cylindrically and radially inward of said thrust member (33).

## Patentansprüche

1. Fahrzeug-Automatikgetriebe (T) zum Einrichten mehrerer Vorwärtsgangstufen, aufweisend: ein Getriebegehäuse (10); eine Antriebswelle (14); einen Kraftübertragungsmechanismus (M), der mit der Antriebswelle verbunden ist und mehrere Kraftübertragungselemente aufweist; eine mit dem Kraftübertragungsmechanismus (M) verbundene Abtriebswelle (15); eine Kupplung (C-1 bzw. C-2), die die Antriebswelle (14) antreibend mit einem der Kraftübertragungselemente verbindet; und eine hydraulische Servoeinrichtung (3 bzw. 4) zum Aktivieren der Kupplung (C-1 bzw. C-2), wenn ihr ein Öldruck zugeführt wird,
wobei das Getriebegehäuse (10) den Kraftübertragungsmechanismus (M), die Kupplung (C-1, C-2) und die hydraulische Servoeinrichtung (3, 4) umschließt und zwei axial in einem Abstand angeordnete Seitenwände (10c, 10b) aufweist, die einander gegenüberliegen,
wobei sich die Antriebswelle (14) von einer der Seitenwände (10c) über den Kraftübertragungsmechanismus (M) zur anderen Seitenwand (10b) erstreckt, die der einen der Seitenwände axial gegenüberliegt,
wobei die hydraulische Servoeinrichtung (3, 4) aufweist:
einen ortsfesten Zylinder (30 bzw. 40), der auf der einen (10b bzw. 10c) der Seitenwände ausgebildet ist,
einen Kolben (31 bzw. 41), der im Zylinder (30 bzw. 40) gleitfähig angeordnet ist und zusammen mit dem Zylinder eine Ölkammer (3C bzw. 4C) festlegt, der ein Öldruck zuzuführen ist,
ein zwischen dem Kolben (31) und der Kupplung (C-1) angeordnetes erstes Lager (32) zum Übertragen der vom Kolben (31) kommenden Schubkräfte auf die Kupplung (C-1), wenn der Ölkammer (3C) der Öldruck zugeführt wird, wobei relative Drehungen zwischen dem Kolben und der Kupplung ermöglicht sind,
einen neben der Kupplung (C-1) angeordneten Flanschabschnitt (56) zum Übertragen der vom Kolben (31) über die Kupplung (C-1) übertragenen Schubkraft auf die Antriebswelle (14), und
wobei ein zweites Lager (42) zum Regeln der Axialbewegungen der Antriebswelle (14) zwischen der Antriebswelle (14) und der anderen (10c) der zwei Seitenwände angeordnet ist.

2. Getriebe nach Anspruch 1,
wobei die Kupplung (C-1) eine Nabe (53) mit einem äußeren Umfang, mit dem ein Reibungsplattenabschnitt (50) verkeilt ist, und einen Kranz (54) aufweist, der auf der radial äußeren Seite der Nabe (53) gegenüber dem Reibungsplattenabschnitt (50) angeordnet ist und einen inneren Umfang aufweist, mit dem der Reibungsplattenabschnitt (50) verkeilt ist, und
wobei die Antriebswelle (14) mit der Nabe (53) verbunden ist, während eines der Kraftübertragungselemente mit dem Kranz (54) verbunden ist.

3. Getriebe nach Anspruch 2,
wobei die Nabe (53) einen Öldurchgang (57) zum Verbinden des inneren und äußeren Umfangs der Nabe (53) aufweist, um das von seiner radial inneren Seite zugeführte Schmieröl, in den Reibungsplattenabschnitt (50) einzubringen.

4. Getriebe nach einem der Ansprüche 1 bis 3,
wobei die hydraulische Servoeinrichtung (3) ein Schubelement (33) mit einer ringförmigen Scheibenform aufweist, das zwischen der Kupplung und dem ersten Lager (32) angeordnet ist, und
wobei das Schubelement (33) am inneren Umfangsabschnitt dem ersten Lager (32) und am äußeren Umfangsabschnitt der Kupplung (C-1) gegenüberliegt.

5. Getriebe nach Anspruch 4,
wobei die hydraulische Servoeinrichtung (3) eine Rückholfeder (58) aufweist, um eine Schubkraft auf den Kolben (31) auszuüben, die der Bewegung des Kolbens (31) entgegenwirkt, wenn der Ölkammer (3C) der Öldruck zugeführt wird, und
wobei die Rückholfeder (58) auf der radial inneren Seite der Kupplung (C-1) angeordnet ist.

6. Getriebe nach einem der Ansprüche 1 bis 5,
wobei die hydraulische Servoeinrichtung (3) eine Rückholfeder (58), die dazu dient, eine Schubkraft auf den Kolben (31) auszuüben, die der Bewegung des Kolbens (31) entgegenwirkt, wenn der Ölkammer (3C) der Öldruck zugeführt wird, und ein zwischen der Kupplung (C-1) und dem ersten Lager (32) angeordnetes Schubelement (33) aufweist, und
wobei die Rückholfeder (58) so angeordnet ist, daß sie an ihrem einen Ende axial an das Schubelement (33) und an ihrem anderen Ende an den Flanschabschnitt (56) anstößt.

7. Getriebe nach einem der Ansprüche 1 bis 6,
wobei die hydraulische Servoeinrichtung (3) ein zwischen der Kupplung (C-1) und dem ersten Lager (32) angeordnetes Schubelement (33) aufweist,
wobei das erste Lager (32) ein Paar von Laufringen (34, 35) aufweist, die an den Kolben (31) bzw. das Schubelement (33) anstoßen, und
wobei der an das Schubelement (33) anstoßende Laufring (35) einen Schmieröl-Aufnahmeabschnitt (36) aufweist, der zylindrisch und radial innen vom Schubelement (33) ausgedehnt ist.

## Revendications

1. Transmission automatique (T) pour véhicule servant à établir une pluralité d'étages de vitesse avant, comprenant : un carter de transmission (10); un arbre d'entrée (14); un mécanisme de transmission (M) relié audit arbre d'entrée et comportant une pluralité d'éléments de transmission; un arbre de sortie (15) relié audit mécanisme de transmission (M); un embrayage (C-1, C-2, respectivement) reliant ledit arbre d'entrée (14) à l'un desdits éléments de transmission de manière entraînée; et un servomécanisme hydraulique (3, 4, respectivement) pour actionner ledit embrayage (C-1, C-2, respectivement) lorsqu'il reçoit une pression d'huile,
dans laquelle ledit carter de transmission (10) renferme ledit mécanisme de transmission (M), ledit embrayage (C-1, C-2) et ledit servomécanisme hydraulique (3, 4) et comporte deux parois latérales espacées axialement (10c, 10b) afin d'être confrontées l'une à l'autre,
dans laquelle ledit arbre d'entrée (14) s'étend de l'une desdites parois latérales (10c) à l'autre paroi latérale (10b), axialement opposée à la première dite paroi latérale, à travers ledit mécanisme de transmission (M),
dans laquelle ledit servomécanisme hydraulique (3, 4) comporte :
un cylindre de type statique (30, 40, respectivement) formé sur la première dite paroi (10b, 10c, respectivement) desdites parois latérales;
un piston (31, 41, respectivement) agencé à coulissement dans ledit cylindre (30, 40, respectivement) et définissant, avec ledit cylindre, une chambre à huile (3C, 4C, respectivement) destinée à recevoir une pression d'huile;
un premier roulement (32) agencé entre ledit piston (31) et ledit embrayage (C-1) pour transmettre les forces de poussée, provenant dudit piston (31) lorsque la pression d'huile est transmise à ladite chambre à huile (3C), audit embrayage (C-1) tout en permettant les rotations relatives entre ledit piston et ledit embrayage;
une partie flasque (56) agencée en position adjacente audit embrayage (C-1) pour transmettre la force de poussée, telle que transmise depuis ledit piston à travers ledit embrayage (C-1), audit arbre d'entrée (14), et
dans laquelle un second roulement (42) servant à réguler les mouvements axiaux dudit arbre d'entrée (14) est intercalé entre ledit arbre d'entrée (14) et l'autre (10c) desdites deux parois latérales.

2. Transmission selon la revendication 1,
dans laquelle ledit embrayage (C-1) comporte un moyeu (53) ayant une circonférence extérieure, à laquelle une partie plaque de friction (50) est fixée au moyen de cannelures, et un rebord (54) agencé du côté radialement extérieur dudit moyeu (53) en travers de ladite partie plaque de friction (50) et ayant une circonférence intérieure, à laquelle ladite partie plaque de friction (50) est fixée au moyen de cannelures, et
dans laquelle ledit arbre d'entrée (14) est relié audit moyeu (53) tandis que l'un desdits éléments de transmission est connecté audit rebord (54).

3. Transmission selon la revendication 2,
dans laquelle ledit moyeu (53) comporte un passage d'huile (57) destiné à faire communiquer les circonférences intérieure et extérieure dudit moyeu (53) pour introduire l'huile lubrifiante, qui provient du côté radialement intérieur de celui-ci, sur ladite partie plaque de friction (50).

4. Transmission selon l'une quelconque des revendication 1 à 3, dans laquelle ledit servomécanisme hydraulique (3) comporte un élément de poussée (33) en forme de disque annulaire intercalé entre ledit embrayage et ledit premier roulement (32), et
dans laquelle ledit élément de poussée (33) se trouve en face dudit premier roulement (32) dans la partie circonférentielle intérieure et dudit embrayage (C-1) dans la partie circonférentielle extérieure.

5. Transmission selon la revendication 4,
dans laquelle ledit servomécanisme hydraulique (3) comporte un ressort de rappel (58) pour appliquer une force de poussée audit piston (31) opposée au mouvement dudit piston lorsque la pression d'huile est transmise à ladite chambre à huile (3C), et
dans laquelle ledit ressort de rappel (58) est agencé du côté radialement intérieur dudit embrayage (C-1).

6. Transmission selon l'une quelconque des revendication 1 à 5, dans laquelle ledit servomécanisme hydraulique (3) comporte un ressort de rappel (58) pour appliquer une force de poussée audit piston (31) opposée au mouvement dudit piston lorsque la pression d'huile est transmise à ladite chambre à huile (3C), et un élément de poussée (33) intercalé entre ledit embrayage (C-1) et ledit premier roulement (32), et
dans laquelle ledit ressort de rappel (58) est agencé de façon à prendre appui axialement contre ledit élément de poussée (33) en sa première extrémité et ladite partie flasque (56) en son autre extrémité.

7. Transmission selon l'une quelconque des revendication 1 à 6, dans laquelle ledit servomécanisme hydraulique (3) comporte un élément de poussée (33) intercalé entre ledit embrayage (C-1) et ledit premier roulement (32),
dans laquelle ledit premier roulement (32) comporte une paire de bagues (34, 35) en appui respectivement contre ledit piston (31) et ledit élément de poussée (33), et
dans laquelle la bague (35) destinée à prendre appui contre ledit élément de poussée (33) comporte une partie réceptrice d'huile lubrifiante (36) élargie cylindriquement et radialement vers l'intérieur dudit élément de poussée (33).
